# EUROPÄISCHE PATENTSCHRIFT

(11) **EP 0 450 261 B1**
(45) Veröffentlichungstag und Bekanntmachung des Hinweises auf die Patenterteilung: **13.07.1994**
(21) Anmeldenummer: 90890095.4
(22) Anmeldetag: 02.04.1990
(51) Int. Cl.: H05B 37/02

(54) **Lichtsteuerung für einen elektrischen Schalter**
Light control for an electric switch
Commande par la lumière d'un interrupteur électrique

(43) Veröffentlichungstag der Anmeldung: 09.10.1991
(73) Patentinhaber: KRISTL, SEIBT & CO. GESELLSCHAFT M.B.H., A-8052 Graz (AT)
(72) Erfinder: Rossegger, Wilfried, Dipl.-Ing. Dr., A-8052 Graz (AT); Seibt, Alois, A-8041 Graz (AT); Baumgartner, Karl, A-8020 Graz (AT)
(74) Vertreter: Hübscher, Heiner, Dipl.-Ing.

(56) Entgegenhaltungen:
- GB-A- 2 190 803
- US-A- 4 665 321

## Beschreibung

Die Erfindung bezieht sich auf eine Lichtsteuerung für einen elektrischen Schalter mit einer Vergleicherstufe, die eingangsseitig einerseits an einem Istwertgeber für die Lichtstärke und anderseits an einem Sollwertgeber für einen oberen Grenzwert der Lichtstärke anliegt und ausgangsseitig zur Steuerung des Schalters mit dessen Stellglied verbunden ist.

Um eine Beleuchtung in Abhängigkeit von den Tageslichtverhältnissen ein- und ausschalten zu können, ist es bekannt, das Stellglied des elektrischen Lichtschalters über eine Vergleicherstufe anzusteuern, die die mit Hilfe eines Istwertgebers erfaßte Lichtstärke mit dem Sollwert für einen oberen und unteren Grenzwert der Lichtstärke vergleicht, so daß beim Unterschreiten des unteren Grenzwertes die Beleuchtung eingeschaltet und beim Überschreiten des oberen Grenzwertes die Beleuchtung wieder ausgeschaltet wird. Das Vorgeben eines unteren Grenzwertes der Lichtstärke für das Einschalten und eines oberen Grenzwertes für das Ausschalten der Beleuchtung ist notwendig, um den beim Ein- bzw Ausschalten der Beleuchtung auftretenden Lichtstärkesprung berücksichtigen zu können und ein dadurch bedingtes wiederholtes Ein- und Ausschalten zu vermeiden. Trotz der den Konstruktionsaufwand vergrößernden Vorgabe eines oberen und eines unteren Grenzwertes der Lichtstärke für das Ein- und Ausschalten der Beleuchtung ergeben sich jedoch wiederholte Schaltvorgänge bei Lichtschwankungen. Darüber hinaus besteht die Gefahr, daß die Lichtsteuerung die Beleuchtung beim Abnehmen des Tageslichtes wieder einschaltet, obwohl die Beleuchtung gar nicht benötigt wird, weil während der Zeit ausreichenden Tageslichtes verabsäumt wurde, die Lichtsteuerung abzuschalten.

Der Erfindung liegt somit die Aufgabe zugrunde, diese Mängel zu vermeiden und eine Lichtsteuerung für einen elektrischen Schalter der eingangs geschilderten Art mit einfachen Mitteln so zu verbessern, daß einerseits unerwünschte Schaltwiederholungen vermieden und anderseits sichergestellt werden kann, daß der Schalter nur bei Bedarf betätigt wird.

Die Erfindung löst die gestellte Aufgabe dadurch, daß in der Steuersignalverbindung zwischen der Vergleicherstufe und dem Stellglied eine mit dem Ausschalten des Schalters abfallende und lediglich über einen Schaltsignalgeber einschaltbare Schaltstufe als Wiedereinschaltsperre vorgesehen ist.

Durch das Vorsehen einer solchen Wiedereinschaltsperre wird nach dem Ausschalten des elektrischen Schalters aufgrund einer Überschreitung des Sollwertes für die obere Grenze der Lichtstärke die Wiedereinschaltung des Schalters beim Absinken des erfaßten Istwertes der Lichtstärke unter diesen Grenzwert verhindert, so daß es zum Wiedereinschalten notwendig ist, einen Schaltsignalgeber zu betätigen, der im einfachsten Fall durch einen Tastschalter gebildet werden kann. Liegt bei der Betätigung des Schaltsignalgebers die vom Istwertgeber erfaßte Lichtstärke über dem oberen Grenzwert für das Einschalten einer Beleuchtung, so wird über die Lichtsteuerung das Einschalten der Beleuchtung verhindert. Ein Einschalten ist also nur dann möglich, wenn die Helligkeit unter dem vorgegebenen Grenzwert liegt und ein entsprechender Bedarf vorhanden ist, weil ja der Schaltsignalgeber zusätzlich betätigt werden muß.

Um bei kurzzeitigen Lichtschwankungen nicht mit einem Ausschalten des elektrischen Schalters rechnen zu müssen, kann die Vergleicherstufe das Stellglied des Schalters über ein vorzugsweise einstellbares Zeitglied ansteuern, so daß der Schalter erst beim Abfallen des Zeitgliedes betätigt wird, soferne dann noch eine Grenzwertüberschreitung vorliegt.

Obwohl die Schaltstufe für die Wiedereinschaltsperre zwischen der Vergleicherstufe und dem Stellglied des elektrischen Schalters unterschiedlich aufgebaut sein kann, weil es ja lediglich darauf ankommt, beim Öffnen des elektrischen Schalters die Steuersignalverbindung zwischen der Vergleicherstufe und dem Stellglied zu unterbrechen, ergeben sich besonders vorteilhafte Konstruktionsverhältnisse, wenn die Schaltstufe für die Wiedereinschaltsperre ein Und-Glied umfaßt, das eingangsseitig einerseits am Ausgang der Vergleicherstufe und anderseits am Ausgang einer bistabilen Kippstufe anliegt, die einen mit dem Schaltsignalgeber verbundenen Steuereingang und einen mit dem Ausschalten des Schalters ansteuerbaren Setzeingang für die das Und-Glied bei einer Steuersignalbeaufschlagung für den geschlossenen Schalter sperrende Kippstellung aufweist. Durch diese Maßnahme wird mit einfachen Mitteln ein Wiedereinschalten des Schalters zufolge einer abnehmenden Lichtstärke wirksam verhindert, weil die Kippstufe über den Setzeingang in eine Kippstellung gebracht wird, in der ein Durchschalten des Und-Gliedes beim Auftreten eines Steuersignales zum Einschalten des Schalters verhindert wird. Der elektrische Schalter kann daher ausschließlich über den Schaltsignalgeber geschaltet werden, weil bei dessen Betätigung die Kippstufe in die andere Kippstellung umkippt und folglich an den beiden Eingängen der Und-Stufe je ein das Durchschalten der Und-Stufe bewirkendes Steuersignal anliegt, was die Betätigung des Stellgliedes und damit das Einschalten des elektrischen Schalters zur Folge hat. Wird der Schaltsignalgeber neuerlich betätigt, so wird der elektrische Schalter wieder ausgeschaltet. Die neuerliche Beaufschlagung des Steuereinganges der Kippstufe bewirkt ja deren Umkippen in die das Und-Glied sperrende Kippstellung.

Liegt am Ausgang der Vergleicherstufe kein Steuersignal an, ist der Schalter also offen, so kann eine Betätigung des Schaltsignalgebers zu keinem Einschalten des Schalters führen, weil über das Und-Glied unabhängig von der Kippstellung der Kippstufe kein Steuersignal zum Stellglied gelangen kann. Um jedoch in einem solchen Fall die Schalterfunktion überprüfen und anzeigen zu können, daß ein Einschalten des Schalters aufgrund der herrschenden Helligkeitsverhältnisse unterbunden wird, kann der Ausgang der Kippstufe über einen zum Und-Glied parallelen Zeitschalter mit dem Stellglied des Schalters verbunden sein, der somit bei einer Betätigung des Schaltsignalgebers über die Kippstufe und den Zeitschalter für eine vorgegebene Zeit unter Umgehung der Wiedereinschaltsperre eingeschaltet wird. Dieses zangsläufige Einschalten der Beleuchtung bringt außerdem den Vorteil mit sich, daß der Vergleich des Lichtstärke-Istwertes mit dem vorgegebenen Grenzwert bei eingeschalteter Beleuchtung durchgeführt werden kann, so daß mit der Vorgabe lediglich eines oberen Grenzwertes das Auslangen gefunden wird.

Besonders zweckmäßig ist es in diesem Fall, das Und-Glied und den Zeitschalter an ein dem Stellglied des Schalters vorgeordnetes Oder-Glied anzuschließen, um das Stellglied des Schalters über einen Steuereingang betätigen zu können.

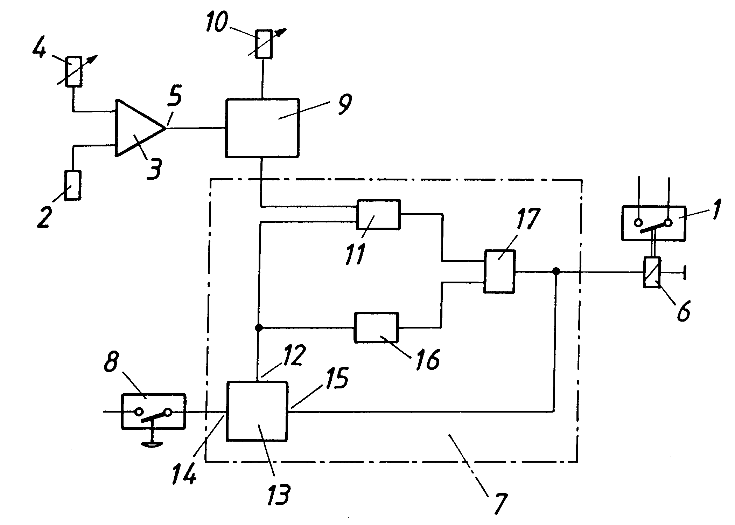

In der Zeichnung ist der Erfindungsgegenstand beispielsweise dargestellt, und zwar wird eine erfindungsgemäße Lichtsteuerung für einen elektrischen Schalter in einem schematischen Blockschaltbild gezeigt.

Gemäß dem dargestellten Ausführungsbeispiel ist für die Steuerung eines elektrischen Schalters 1, insbesondere für eine Beleuchtung, ein als Fotoelement ausgebildeter Istwertgeber 2 für die an einer bestimmten Stelle des zu beleuchtenden Raumes herrschende Lichtstärke vorgesehen, die in einer Vergleicherstufe 3 mit einem durch einen Sollwertgeber 4 vorgebbaren oberen Grenzwert verglichen wird, der jenen Lichtstärkesollwert angibt, bei dem die Beleuchtung über den Schalter 1 ausgeschaltet werden soll. Liegt die durch den Istwertgeber 2 erfaßte Lichtstärke unterhalb dieses eingestellten Grenzwertes, so liegt am Ausgang 5 der Vergleicherstufe 3 ein Steuersignal an, das über das Stellglied 6 des Schalters 1 dessen Schließstellung festhält. Wird der vorgegebene Grenzwert der Lichtstärke durch den Istwert überschritten, so wird das Steuersignal am Ausgang 5 der Vergleicherstufe 3 gesperrt, wodurch das Stellglied 6 abfällt und der Schalter 1 öffnet. Ein Wiedereinschalten des Schalters 1 aufgrund einer abnehmenden Lichtstärke wird durch eine als Wiedereinschaltsperre wirkende Schaltstufe 7 verhindert, die mit dem Ausschalten des Schalters 1 abfällt und lediglich über einen Schaltsignalgeber 8, beispielsweise einen Tastschalter oder einen Steuerkontakt, wieder eingeschaltet werden kann, so daß die Steuersignalverbindung zwischen der Vergleicherstufe 3 und dem Stellglied 6 des Schalters 1 bis zum Wiedereinschalten der Schaltstufe 7 durch den Schaltsignalgeber 8 unterbrochen ist.

Um die Lichtsteuerung von kurzzeitigen Lichtschwankungen unabhängig zu machen, ist in der Steuersignalverbindung zwischen der Vergleicherstufe 3 und dem Stellglied 6 ein Zeitglied 9 vorgesehen, dessen Abfallzeit über eine Einstelleinrichtung 10 vorgegeben werden kann. Dieses Zeitglied 9 bewirkt, daß für die eingestellte Zeit nach dem Sperren des Ausganges 5 der Vergleicherstufe 3 noch ein Steuersignal an das Stellglied 6 abgegeben wird. Ist beim Abfall des Zeitgliedes 9 der Ausgang 5 der Vergleicherstufe 3 gesperrt, so fällt das Steuersignal am Ausgang des Zeitgliedes 9 ab und der Schalter 1 öffnet. Wird das Zeitglied 9 jedoch nach Ablauf der eingestellten Verzögerungszeit über die Vergleicherstufe 3 mit einem Steuersignal beaufschlagt, so bleibt der Schalter 1 eingeschaltet.

Die Schaltstufe 7 besteht im wesentlichen aus einem Und-Glied 11, das einerseits mit dem Ausgang 5 der Vergleicherstufe 3 und anderseits mit dem Ausgang 12 einer bistabilen Kippstufe 13 verbunden ist, deren Steuereingang 14 am Schaltsignalgeber 8 anliegt. Diese bistabile Kippstufe 13 weist einen in Abhängigkeit von der Steuersignalbeaufschlagung des Stellgliedes 6 setzbaren Setzeingang 15 auf, der beim Abfallen des Schalters 1 den Ausgang 12 der Kippstufe 13 auf Null setzt, so daß über das Und-Glied 11 kein das Einschalten des Schalters 1 bewirkendes Steuersignal durchgeschaltet werden kann. Wird jedoch der Schaltsignalgeber 8 betätigt, so wird die Kippstufe 13 in die andere Kippstellung umgekippt, in der am Ausgang 12 ein Steuersignal ansteht, das bei nicht gesperrtem Ausgang 5 der Vergleicherstufe 3 ein Durchschalten des Und-Gliedes 11 und damit ein Einschalten des Schalters 1 über das Stellglied 6 bewirkt, bis entweder der Ausgang 5 der Vergleicherstufe 3 beim Überschreiten des vorgegebenen Grenzwertes für die Lichtstärke gesperrt oder die Kippstufe 13 über den Schaltsignalgeber 8 umgekippt wird, was jeweils das Sperren des Und-Gliedes 11 und damit ein Abfallen des Schalters 1 mit einem zwangsläufigen Nullsetzen des Ausganges 12 der Kippstufe 13 zur Folge hat.

Ist die durch den Istwertgeber 2 erfaßte Lichtstärke größer als der vorgegebene obere Grenzwert, ist also der Ausgang 5 der Vergleicherstufe 3 gesperrt, so bleibt auch das Und-Glied 11 bei einer Betätigung des Schaltsignalgebers 8 gesperrt. Um trotzdem ein Einschalten der Beleuchtung für eine kurze Zeitspanne sicherzustellen, ist parallel zum Und-Glied 11 ein an den Ausgang 12 der bistabilen Kippstufe 13 angeschlossener Zeitschalter 16 vorgesehen, der mit dem Und-Glied 11 an einem Oder-Glied 17 anliegt, über dessen Ausgang das Stellglied 6 angesteuert wird. In der Sperrstellung des Und-Gliedes 11 kann daher bei einer Betätigung des Schaltsignalgebers 8 und einem dadurch bedingten Umkippen der Kippstufe 13 das am Ausgang 12 der Kippstufe 13 anstehende Steuersignal während der durch den Zeitschalter 16 vorgegebenen Zeitspanne an das Stellglied 6 angelegt und der Schalter 1 eingeschaltet werden, bis mit dem Zeitschalter 16 der Schalter 1 wieder abfällt und die bistabile Kippstufe 13 über den Setzeingang 15 wieder in die Ausgangsstellung zurückgekippt wird.

Die Schaltstufe 7 verhindert somit ein durch ein Abnehmen der Lichtstärke bedingtes Einschalten der Beleuchtung, die nur bei Bedarf über den gesondert zu betätigenden Schaltsignalgeber 8 eingeschaltet wird, was eine vorteilhafte Voraussetzung für einen minimalen Energiebedarf für die Beleuchtung darstellt. Die Schaltstufe 7 kann sehr kompakt aufgebaut und zusammen mit der Lichtsteuerung und dem Schaltsignalgeber 8 in einer üblichen Dose für einen Lichtschalter untergebracht werden, so daß sich für die Installation des Schalters und seine Bedienung übliche Verhältnisse ergeben.

Die Erfindung ist selbstverständlich nicht auf das dargestellte Ausführungsbeispiel beschränkt. So könnte beispielsweise der Schalter 1 an Stelle einer Beleuchtung einen anderen Verbraucher, beispielsweise einen Ventilator, eine Heizung od. dgl., in Abhängigkeit von den herrschenden Lichtverhältnissen schalten. Außerdem könnte die Schaltstufe 7 anders aufgebaut sein, weil es ja lediglich auf eine Wiedereinschaltsperre für den Schalter 1 ankommt, die beim Ausschalten des Schalters 1 die Steuersignalverbindung zwischen der Vergleicherstufe 3 und dem Stellglied 6 unterbricht und nur über den Schaltsignalgeber 8 im Sinne eines Schließens dieser Steuersignalverbindung wieder eingeschaltet werden kann.

## Patentansprüche

1. Lichtsteuerung für einen elektrischen Schalter (1) mit einer Vergleicherstufe (3), die eingangsseitig einerseits an einem Istwergeber (2) für die Lichtstärke und anderseits an einem Sollwertgeber (4) für einen oberen Grenzwert der Lichtstärke anliegt und ausgangsseitig zur Steuerung des Schalters (1) mit dessen Stellglied (6) verbunden ist, dadurch gekennzeichnet, daß in der Steuersignalverbindung zwischen der Vergleicherstufe (3) und dem Stellglied (6) eine mit dem Ausschalten des Schalters (1) abfallende und lediglich über einen Schaltsignalgeber (8) einschaltbare Schaltstufe (7) als Wiedereinschaltsperre vorgesehen ist.

2. Lichtsteuerung nach Anspruch 1, dadurch gekennzeichnet, daß die Vergleicherstufe (3) das Stellglied (6) des Schalters (1) über ein vorzugsweise einstellbares Zeitglied (9) ansteuert.

3. Lichtsteuerung nach Anspruch 1 oder 2, dadurch gekennzeichnet, daß die Schaltstufe (7) für die Wiedereinschaltsperre ein Und-Glied (11) umfaßt, das eingangsseitig einerseits am Ausgang (5) der Vergleicherstufe (3) und anderseits am Ausgang (12) einer bistabilen Kippstufe (13) anliegt, die einen mit dem Schaltsignalgeber (8) verbundenen Steuereingang (14) und einen mit dem Ausschalten des Schalters (1) ansteuerbaren Setzeingang (15) für die das Und-Glied (11) bei einer Steuersignalbeaufschlagung für den geschlossenen Schalter (1) sperrende Kippstellung aufweist.

4. Lichtsteuerung nach Anspruch 3, dadurch gekennzeichnet, daß der Ausgang (12) der Kippstufe (13) über einen zum Und-Glied (11) parallelen Zeitschalter (16) mit dem Stellglied (6) des Schalters (1) verbunden ist.

5. Lichtsteuerung nach Anspruch 4, dadurch gekennzeichnet, daß das Und-Glied (11) und der Zeitschalter (16) an ein dem Stellglied (6) des Schalters (1) vorgeordnetes Oder-Glied (17) angeschlossen sind.

## Claims

1. A light control system for an electrical switch (1), comprising a comparator stage (3), the input of which is connected, on the one hand, to an actual-value sensor (2) for the light intensity and, on the other hand, to a set-value sensor (4) for a top light intensity limit, while the output side is connected to the switch actuator (6) for the purpose of controlling the switch (1), characterised in that the control signal connection between the comparator stage (3) and the actuator (6) contains locking to prevent the switch from being re-closed, such means comprising a switching stage (7) which drops with opening of the switch (1) and which can be switched on only via a switching signal transmitter (8).

2. A light control system according to claim 1, characterised in that the comparator stage (3) controls the actuator (6) for the switch (1) via a preferably adjustable time network (9).

3. A light control system according to claim 1 or 2, characterised in that the switching stage (7) for the re-closing lock comprises an AND gate (11), the input side of which is connected, on the one hand, to the output (5) of the comparator stage (3) and, on the other hand, to the output (12) of a bistable trigger (13), which has a control input (14) connected to the switching signal transmitter (8), and a setting input (15), controllable with the switching of the switch (1), for the trigger position which blocks the AND gate (11) in the event of reception of a control signal for the closed switch (1).

4. A light control according to claim 3, characterised in that the output (12) of the trigger (13) is connected to the actuator (6) of the switch (1) via a time switch (16) parallel to the AND gate (11).

5. A light control system according to claim 4, characterised in that the AND gate (11) and the time switch (16) are connected to an OR gate (17) preceding the actuator (6) of the switch (1).

## Revendications

1. Commande lumineuse d'un interrupteur électrique (1), avec un étage comparateur (3) qui, côté entrée, s'applique d'une part à un transducteur (2) de valeur réelle appréhendant l'intensité lumineuse, et, d'autre part, à un transducteur (4) de valeur de consigne destiné à une valeur limite supérieure de l'intensité lumineuse, et qui, côté sortie, est relié à l'organe (6) de réglage de l'interrupteur (1), en vue d'assurer sa commande,
caractérisée en ce que, dans la liaison de signal de commande entre l'étage comparateur (3) et l'organe de réglage (6) est prévu, à titre d'élément de blocage du réenclenchement, un étage de commutation (7), retombant lors de la mise hors circuit de l'interrupteur (1) et susceptible d'être mis en circuit seulement par l'intermédiaire d'un transducteur (8) de signal de commutation.

2. Commande lumineuse selon la revendication 1,
caractérisée en ce que l'étage comparateur (3) attaque l'organe de réglage (6) de l'interrupteur (1) par l'intermédiaire d'un organe temporisé (9), de préférence réglable..

3. Commande lumineuse selon la revendication 1 ou 2,
caractérisée en ce que l'étage de commutation (7), destiné à l'élément de blocage du réenclenchement, comprend un organe "ET" logique (11), relié côté entrée, d'une part, à la sortie (5) de l'étage comparateur (3) et, d'autre part, à la sortie (12) d'un étage bascule bistable (13), et qu'il présente une entrée de commande (14), reliée au transducteur de signal de commutation (8), et une entrée de positionnement (15), pouvant être commandée par la mise hors circuit de l'interrupteur (1), pour la position de basculement bloquant l'organe "ET" logique (11) en cas de sollicitation par un signal de commande destiné à fermer l'interrupteur (1).

4. Commande lumineuse selon la revendication 3,
caractérisée en ce que la sortie (12) de l'étage de bascule (13) est reliée à l'organe de réglage (6) de l'interrupteur (1) par l'intermédiaire d'un interrupteur temporisé (16), mis en circuit en parallèle à l(organe logique ET (11).

5. Commande lumineuse selon la revendication 4,
caractérisée en ce que l'organe logique ET (11) et l'interrupteur temporisé (16) sont raccordés à un organe logique OU (17) branché en aval de l'organe de réglage (6) de l'interrupteur (1).
